# EUROPÄISCHE PATENTSCHRIFT

(11) **EP 1 740 078 B1**
(45) Veröffentlichungstag und Bekanntmachung des Hinweises auf die Patenterteilung: **30.07.2008**
(21) Anmeldenummer: 05747779.6
(22) Anmeldetag: 13.04.2005
(51) Int. Cl.: A47J 31/44, A47B 77/08

(54) **VORRICHTUNG ZUM HERSTELLEN EINES BRÜHGETRÄNKES**
DEVICE FOR PRODUCING A HOT DRINK
DISPOSITIF DE PREPARATION D'UNE BOISSON CHAUDE

(30) Priorität: 13.04.2004 DE 102004017831
(43) Veröffentlichungstag der Anmeldung: 10.01.2007
(73) Patentinhaber: BSH Bosch und Siemens Hausgeräte GmbH, 81739 München (DE)
(72) Erfinder: FUGGER, Michael, 83342 Tacherting (DE); NÜSSLER, Gerhard, 80798 München (DE); OSTERMAIER, Albert, 83371 Stein/Traun (DE); RIESER, Frank, 82194 Gröbenzell (DE); VETTER, Roland, 89537 Giengen-Sachsenhausen (DE)
(86) Internationale Anmeldenummer: PCT/EP2005/051621
(87) Internationale Veröffentlichungsnummer: WO 2005/099535

(56) Entgegenhaltungen:
- EP-A- 1 051 941
- DE-A1- 19 701 033

## Beschreibung

Die Erfindung betrifft eine Vorrichtung zum Herstellen eines Brühgetränkes.

Eine derartige Vorrichtung ist z.B. eine Einbau-Kaffeemaschine, wie sie beispielsweise aus der EP 1051941 A2 bekannt ist. Die aus der EP 1051941 A2 bekannte Einbau-Kaffeemaschine umfasst eine ein Gehäuse aufweisende Geräteeinheit, die auf einem Auszug befestigt und mit dessen Hilfe aus einem. Aufnahmehohlraum herausziehbar ist, um beispielsweise Bohnen oder Wasser nachzufüllen oder Reparaturen vorzunehmen, und eine aus dem Gehäuse herausnehmbare Restwasserschale. Das Gehäuse umfasst außerdem eine Frontwand, die im Wesentlichen fluchtend mit der die Öffnung des Aufnahmehohlraums umgebenden Wandung des Möbels oder der Nische ausgerichtet ist. Zum Herausziehen der Geräteeinheit muss der Benutzer zunächst an irgendeinem Vorsprung an der Vorderwand des Gehäuses, beispielsweise dem Kaffeeauslauf, ziehen, bis er die Vorderwand so weit aus dem Aufnahmehohlraum herausgezogen hat, dass er die Vorderwand von unten hintergreifen kann, um das Gehäuse vollständig aus dem Aufnahmehohlraum zu ziehen.

Der Erfindung liegt die Aufgabe zugrunde, eine Vorrichtung zum Herstellen eines Brühgetränkes bereitzustellen, bei der die Geräteeinheit aus dem Aufnahmehohlraum und die Restwasserschale aus dem Gehäuse bequem und einfach herausziehbar sind.

Die Aufgabe wird gelöst durch eine Vorrichtung zum Herstellen eines Brühgetränkes mit einer Geräteeinheit, die während des bestimmungsgemäßen Gebrauchs der Vorrichtung in einem Aufnahmehohlraum angeordnet ist, und mit einer Restwasserschale, die während des bestimmungsgemäßen Gebrauchs der Vorrichtung in der Geräteeinheit angeordnet ist, dadurch gekennzeichnet, dass die Vorrichtung Mittel zum Herausnehmen der Geräteeinheit aus dem Aufnahmehohlraum und Mittel zum Herausnehmen der Restwasserschale aus der Geräteeinheit umfasst und sich die Mittel zum Herausnehmen der Geräteeinheit aus dem Aufnahmehohlraum und die Mittel zum Herausnehmen der Restwasserschale aus der Geräteeinheit zumindest teilweise überschneiden.

Gemäß einer bevorzugten Ausführungsform der erfindungsgemäßen Vorrichtung umfassen die Mittel zum Herausnehmen der Geräteeinheit aus dem Aufnahmehohlraum eine an der Geräteeinheit angeordnete erste Grifffläche und eine Öffnung an der Geräteeinheit, über die die erste Grifffläche zugänglich ist, und die Mittel zum Herausnehmen der Restwasserschale aus der Geräteeinheit eine an der Restwasserschale angeordnete zweite Grifffläche und die Öffnung an der Geräteeinheit, über die auch die zweite Grifffläche zugänglich ist. Durch die erfindungsgemäße Ausgestaltung werden auf konstruktiv einfache Weise Griffflächen angeordnet, mit denen sowohl die Geräteeinheit als auch die Restwasserschale leicht und einfach herausziehbar sind. Die beiden Griffflächen sind über die gleiche Öffnung im Gehäuse zugänglich, was es für den Benutzer äußerst einfach macht, deren Anordnung zu lokalisieren. Auch stört eine einzige Öffnung in der Vorderwand das Design nicht so nachhaltig, wie dies mehrere Öffnungen tun würden.

Wenn nach einer Variante der erfindungsgemäßen Vorrichtung die Öffnung an einer Schnittstelle zwischen einer Frontwand der Restwasserschale und einer Frontwand des Gehäuses vorgesehen ist und die zweite Grifffläche an einer Seite der Öffnung an der Rückseite der Frontwand der Restwasserschale und die erste Grifffläche an der anderen Seite der Öffnung an der Rückseite der Frontwand des Gehäuses vorgesehen ist, dann ist es für den Benutzer einerseits sehr einfach, die zum Herausziehen notwendige Kraft aufzuwenden, andererseits sind die beiden Griffflächen durch ihre Anordnung an unterschiedlichen Seiten de Öffnung klar in ihrer Funktion zu trennen, so dass der Benutzer keine Schwierigkeiten hat, das jeweils gewünschte Teil herauszuziehen.

Zweckmäßigerweise ist die Geräteeinheit gemäß einer Ausführungsform der erfindungsgemäßen Vorrichtung im Aufnahmehohlraum lösbar verankert, so dass ein unbeabsichtigtes Herausziehen, beispielsweise beim Herausziehen der Restwasserschale, vermieden wird.

Bevorzugt erfolgt die Verankerung der Geräteeinheit im Aufnahmehohlraum gemäß einer weiteren Variante der erfindungsgemäßen Vorrichtung durch eine lösbare Verriegelung, was ein unbeabsichtigtes Herausziehen weiter erschwert; insbesondere dann, wenn die Verriegelung bevorzugt ein federbelastetes Rastteil aufweist.

Das Herausziehen der Geräteeinheit wird weiter erleichtert, wenn auch das Betätigungselement der Verriegelung gemäß besonders bevorzugter Ausführungsformen über die Öffnung zugänglich, oder im Griffbereich der ersten Grifffläche angeordnet ist, so dass der Benutzer mit einem Griff sowohl das Betätigungselement als auch die Grifffläche erreicht.

Nach einer weiteren Variante der erfindungsgemäßen Vorrichtung weist die Verriegelung einen um eine horizontale Achse verschwenkbaren Rasthebel auf, der an seinem einen Arm mit einem Rastteil versehen ist und der an seinem anderen Arm eine Betätigungsfläche aufweist, die sich im Wesentlichen parallel zur ersten Grifffläche erstreckt.

Um zu verhindern, dass sich die Restwasserschale unbeabsichtigt aus dem Gehäuse löst, wenn die Geräteeinheit aus dem Aufnahmehohlraum herausgezogen wird, ist die Restwasserschale nach einer weiteren Variante der erfindungsgemäßen Vorrichtung im Gehäuse lösbar verankert.

Da die Restwasserschale, verglichen mit der Geräteeinheit, relativ leicht ist, reicht es nach einer Variante der erfindungsgemäßen Vorrichtung aus, die Restwasserschale durch eine form- und/oder reibschlüssige Hemmung im Gehäuse zu verankern.

Ein Ausführungsbeispiel einer erfindungsgemäßen Vorrichtung zum Herstellen eines Brühgetränkes in Form einer Einbau-Kaffeemaschine wird nachfolgend anhand der schematischen Zeichnungen näher erläutert. Es zeigen:

Fig. 1 eine schematische, teilweise Vorderansicht einer erfindungsgemäß ausgebildeten Einbau-Kaffeemaschine,

Fig. 2 den Schnitt II-II aus Fig. 1,

Fig. 3 die erfindungsgemäße Kaffeemaschine beim Herausziehen der Restwasserschale, und

Fig. 4 die erfindungsgemäße Kaffeemaschine beim Herausziehen des Gehäuses.

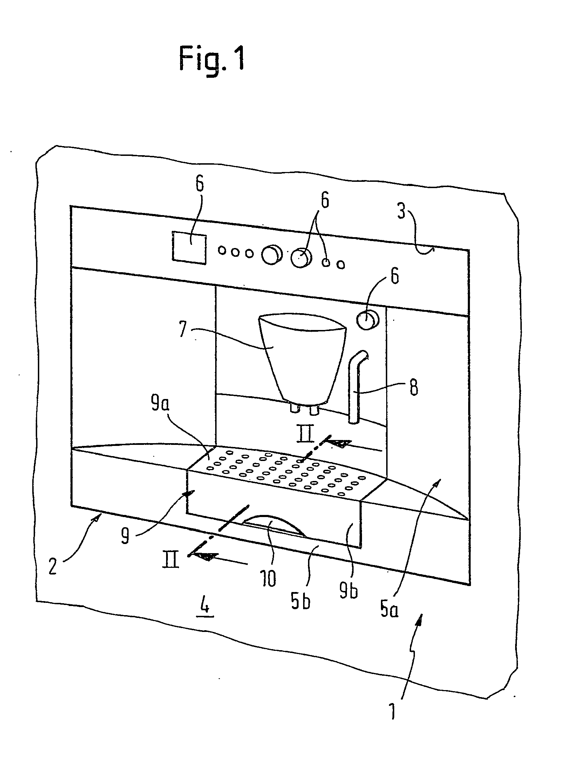

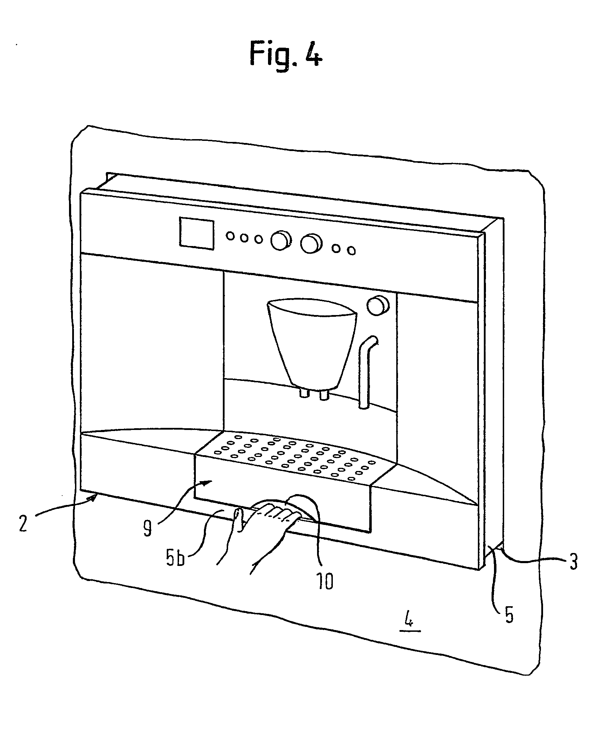

Fig. 1 zeigt in einer schematischen Teildarstellung in Vorderansicht eine Einbau-Kaffeemaschine 1, die eine Geräteeinheit 2, d.h. die eigentliche Kaffeemaschine enthält, die in einem Aufnahmehohlraum 3 (Fig. 4) einer Einbaustruktur 4, also beispielsweise einem Küchen- oder einem sonstigen Möbel, einer Wandnische oder dgl., untergebracht ist.

Die Geräteeinheit 2 enthält ein Gehäuse 5 (Fig. 4) mit einer Vorderfront 5a, die dem Benutzer zugewandt ist und die üblichen Bedien- und Anzeigeelemente 6 sowie eine Ausgabe 7 für Kaffeegetränk und eine Ausgabe 8 für heißes Wasser und/oder Milchschaum enthält. Die Einbau-Kaffeemaschine kann im Hinblick auf die Ausgestaltung der Geräteeinheit 2 und des Aufnahmehohlraums 3 in bekannter Weise ausgebildet sein.

In das Gehäuse 5 ist eine Restwasserschale 9 versenkt, die an ihrer den Auslässen 7 und 8 zugewandten Oberseite mit dem üblichen Lochblech 9a abgedeckt ist, auf das die zu befüllenden Gefäße gestellt werden können und durch das nachtropfende oder überlaufende Flüssigkeit abgezogen und in der Restwasserschale 9 gesammelt werden kann. Die Restwasserschale 9 enthält weiterhin eine Frontwand 9b, die im dargestellten Ausführungsbeispiel benachbart zu einer Frontwand 5b des Gehäuses 5 angeordnet ist. Insbesondere erstreckt sich die Frontwand 5b über einen Bereich unterhalb der Frontwand 9b der Restwasserschale 9 und schließt unmittelbar an diese an. An der Schnittstelle zwischen der Frontwand 9b der Restwasserschale 9 und der Frontwand 5b des Gehäuse 5 ist eine Öffnung 10 vorgesehen, die sich im dargestellten Ausführungsbeispiel durch die Frontwand 9b hindurch erstreckt und an der unteren Schnittstelle zwischen der Frontwand 9b zur Frontwand 5b vorgesehen ist. Die Öffnung 10 hat im vorliegenden Ausführungsbeispiel eine halbkreis- bzw. kreisabschnittförmige Gestalt mit einer gekrümmten Begrenzungslinie ohne Ecken und ist so groß, dass eine Hand eines durchschnittlich großen Benutzer bequem hindurch gesteckt werden kann.

An einer Seite der Öffnung 10, bevorzugt oberhalb der Öffnung 10, ist an der Rückseite der Frontwand 9b der Restwasserschale 9 eine erste Grifffläche 11 ausgebildet, die zum Herausziehen der Restwasserschale 9 über die Öffnung 10 zugänglich ist. Im dargestellten Ausführungsbeispiel dient als Grifffläche 11 die gesamte, die Öffnung 10 umgebende Rückseite der Frontwand 9b.

An der anderen Seite der Öffnung 10 befindet sich eine zweite Grifffläche 12, die zum Herausziehen der Geräteeinheit an der Rückseite der die Öffnung 10 begrenzenden Frontwand 5b des Gehäuses 5 vorgesehen ist und bevorzugt durch diese gebildet wird. Auch die Grifffläche 12 ist über die Öffnung 10 zugänglich.

Zwischen der Geräteeinheit 2 und dem Aufnahmehohlraum 3, bevorzugt einen im Aufnahmehohlraum 3 fest montierten Montagerahmen 3a, ist eine Verriegelung 13 angeordnet, die die Geräteeinheit 2 im Aufnahmehohlraum 3 verankert. Die Verriegelung 13 enthält ein an der Geräteeinheit 2 angeordnetes Rastteil 14, das hakenförmig ausgebildet ist und einen entsprechend geformten Gegenhaken 15 am Montagerahmen 3a übergreift. Das Rastteil 14 ist Teil eines Rasthebels 16, der über eine Achse 17 drehbar im Gehäuse 5 gelagert ist. Die Achse 17 ist bevorzugt horizontal ausgerichtet und befindet sich in der Nähe der Grifffläche 12, unterhalb der Öffnung 10.

Sowohl das Rastteil 14 als auch das Gegenrastteil 15 enthalten Auflaufflächen 14a, 15a, die miteinander in Eingriff treten, um das Rastteil 14 beim Einschieben der Restwasserschale 9 über das Gegenrastteil 15 zu heben.

Der Rasthebel 16 enthält an der dem Rastteil 14 abgewandten Seite der Achse 17 einen nach oben, d.h. in Richtung der Öffnung 10 vorstehenden Schenkel 18, der ein Betätigungselement für die Verriegelung 13 darstellt. Der Schenkel 18 enthält an seiner Vorderseite eine Betätigungsfläche 18a, die sich im Griffbereich von sich durch die Öffnung 10 erstreckenden Fingern befindet. Die Betätigungsfläche 18a befindet sich vor der Grifffläche 12 und erstreckt sich im Wesentlichen parallel bzw. unter einem Winkel von bis zu etwa 20° zur Grifffläche 12, wenn sich das Rastteil 14 im Eingriff mit dem Gegenrastteil 15 befindet. In dieser Stellung ist das Rastteil 14 bevorzugt durch eine Feder 19 belastet, die entweder eine um die Achse 17 geschlungene und einseitig am Gehäuse 5 verankerte Schraubenfeder, eine Blattfeder oder irgendeine andere geeignete Feder sein kann.

Zum Lösen der Verriegelung 13 wird durch eine Druck auf die Betätigungsfläche 18a der Rasthebel 16 um die Achse 17 und gegen die Kraft der Feder 19 verschwenkt, bis das Rastteil 14 vom Gegenrastteil 15 freikommt. Dann schlägt bevorzugt der Schenkel 18 an die Grifffläche 12 an. Durch die Lage der Betätigungsfläche 18a wird somit die Verriegelung 13 durch einen in die gleiche Richtung ausgeübten Druck wie zum Herausziehen der Geräteeinheit 2 gelöst.

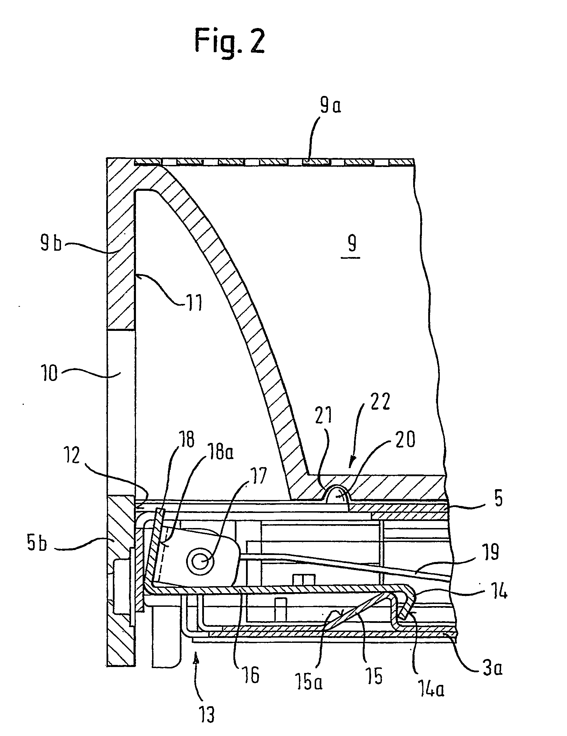

Der Schenkel 18 mit seiner Betätigungsfläche 18a kann sich senkrecht zur Zeichnungsebene der Fig. 2 über im Wesentlichen die gesamte Länge der Öffnung 10 erstrecken, so dass ein Benutzer immer die Betätigungsfläche 18a trifft, egal an welcher Stelle er in die Öffnung 10 eingreift.

Die Restwasserschale 9 ist weiterhin am Gehäuse 5 der Geräteeinheit 2 verankert. Dies soll insbesondere verhindern, dass sich die Restwasserschale 9 öffnet oder gar vom Gehäuse 5 trennt, wenn die Geräteeinheit 2 versehentlich ruckweise oder mit höherer Geschwindigkeit aus dem Hohlraum 3 herausgezogen oder in die diesen hineingeschoben wird. Die Verankerung muss demnach die Restwasserschale 9 lediglich hemmen, d.h. nur geringen Kräften widerstehen. Bevorzugt kann dies durch Reibung erfolgen, was durch ein knapp bemessenes Spiel zwischen der Restwasserschale 9 und den diese umgebenden Strukturen des Gehäuses 5 oder durch eine gesonderte Reibschiene oder dgl. verwirklicht werden kann. Es ist jedoch auch möglich, eine formschlüssige Hemmung 19 vorzusehen, wie dies in Fig. 2 gezeigt ist. Die formschlüssige Hemmung 19 enthält beispielsweise einen kleinen Vorsprung 20 am Gehäuse 5, der in eine Ausnehmung 21 an der Restwasserschale 9 eingreift, wobei die Abmessungen, insbesondere in der Höhe, relativ klein sein können, so dass es ausreicht, die Restwasserschale 9 beim Herausnehmen nur leicht anzuheben.

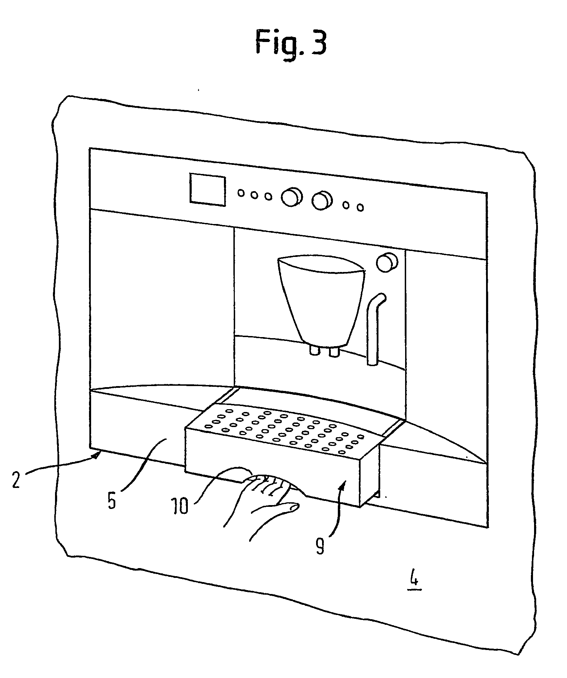

Will ein Benutzer die Restwasserschale 9 aus dem Gehäuse 5 der Geräteeinheit 2 entnehmen, so greift er, wie Fig. 3 zeigt, durch die Öffnung 10 nach oben und zieht die Restwasserschale 9 durch einen Druck auf die Grifffläche 10 aus dem Gehäuse 5 heraus, wobei bei einer Reibhemmung nur ein etwas höherer Druck ausreicht, während bei einer formschlüssigen Hemmung die Restwasserschale 9, wie Fig. 3 zeigt, mit ihrer Ausnehmung 21 über den Vorsprung 20 leicht schräg angehoben werden muss.

Will ein Benutzer die Geräteeinheit 2 aus dem Hohlraum 3 herausziehen, so greift er, wie Fig. 4 zeigt, durch die Öffnung 10 nach unten, und drückt in Herausziehrichtung zunächst auf die Betätigungsfläche 18a. Dadurch wird das Rastteil 14 um die Achse 17 verschwenkt und gegen die Kraft der Feder 19 über das Gegenrastteil 15 angehoben, so dass bei einem fortlaufenden Druck auf die Betätigungsfläche 18a schließlich die Geräteeinheit 2 aus dem Aufnahmehohlraum 3 herausgezogen werden kann. Bevorzugt liegt dabei der Schenkel 18 an der Grifffläche 12 an, so dass auf optimale Weise ein Druck zum Herausziehen aufgebracht werden kann. Es ist jedoch auch möglich, nach dem Lösen der Verriegelung 13 die Betätigungsfläche 18a loszulassen, worauf der Rasthebel 16 durch die Wirkung der Feder 19 zurückschwenkt, und die restliche Auszugsstrecke allein durch einen Druck auf die Grifffläche 12 zurückzulegen. Dies hat den Vorteil, dass die gesamte aufgebrachte Kraft zum Herausziehen der Geräteeinheit 2 verwendet werden kann und nicht ein Teil davon zum Überwinden der Federkraft 19.

Soll die Geräteeinheit 2, beispielsweise nach dem Reinigen, dem Nachfüllen von Wasser und/oder Bohnen oder dgl. wieder in den Hohlraum 3 eingeschoben werden, so reicht ein Druck an irgendeiner Stelle der Geräteeinheit 2 aus, um dies zu bewerkstelligen. Sobald die Auflauffläche 14a des Rastelementes 14 auf die Auflauffläche 15a des Gegenrastelements 15 auftrifft, wird die Federkraft überwunden und die Verriegelung 13 schnappt ein.

In Abwandlung des beschriebenen und gezeichneten Ausführungsbeispiels kann die Öffnung 10 auch in der Frontwand des Gehäuses oder sowohl in der Frontwand der Restwasserschale als auch in der Frontwand des Gehäuses vorgesehen sein. Die Verankerung der Geräteeinheit kann durch andere bekannte Maßnahmen und die Verriegelung durch andere bekannte Rast- oder Befestigungseinrichtungen verwirklicht werden. Auch muss die Verriegelung nicht unbedingt im Bereich der Öffnung vorgesehen sein, sondern kann beispielsweise an einer Stelle angeordnet werden, wo sie von einer Hand des Benutzers gelöst werden kann, während die andere Hand des Benutzers das Herausziehen bewirkt.

## Patentansprüche

1. Vorrichtung zum Herstellen eines Brühgetränkes mit einer Geräteeinheit (2), die während des bestimmungsgemäßen Gebrauchs der Vorrichtung in einem Aufnahmehohlraum (3) angeordnet ist, und mit einer Restwasserschale (9), die während des bestimmungsgemäßen Gebrauchs der Vorrichtung in der Geräteeinheit (2) angeordnet ist, **dadurch gekennzeichnet, dass** die Vorrichtung Mittel zum Herausnehmen der Geräteeinheit (2) aus dem Aufnahmehohlraum (3) und Mittel zum Herausnehmen der Restwasserschale (9) aus der Geräteeinheit (2) umfasst und sich die Mittel zum Herausnehmen der Geräteeinheit (2) aus dem Aufnahmehohlraum (3) und die Mittel zum Herausnehmen der Restwasserschale (9) aus der Geräteeinheit (2) zumindest teilweise überschneiden.

2. Vorrichtung nach Anspruch 1, **dadurch gekennzeichnet, dass** die Mittel zum Herausnehmen der Geräteeinheit (2) aus dem Aufnahmehohlraum (3) eine an der Geräteeinheit (2) angeordnete erste Grifffläche (12, 18a) und eine Öffnung (10) an der Geräteeinheit (2), über die die erste Grifffläche (12, 18a) zugänglich ist, umfassen und die Mittel zum Herausnehmen der Restwasserschale (9) aus der Geräteeinheit (2) eine an der Restwasserschale (4) angeordnete zweite Grifffläche (11) und die Öffnung (10) an der Geräteeinheit (2), über die auch die zweite Grifffläche(11) zugänglich ist, umfassen.

3. Vorrichtung nach Anspruch 2, **dadurch gekennzeichnet, dass** die Öffnung (10) an einer Schnittstelle zwischen einer Frontwand (9b) der Restwasserschale (9) und einer Frontwand (5b) eines Gehäuses (5) vorgesehen ist und die zweite Grifffläche (11) an einer Seite der Öffnung (10) an der Rückseite der Frontwand (9b) der Restwasserschale (9) und die erste Grifffläche (12, 18a) an der anderen Seite der Öffnung (10) an der Rückseite der Frontwand (5b) des Gehäuses (5) vorgesehen ist.

4. Vorrichtung nach einem der Ansprüche 1 bis 3, **dadurch gekennzeichnet, dass** die Geräteeinheit (2) im Aufnahmehohlraum (3) lösbar verankert ist.

5. Vorrichtung nach einem der Ansprüche 1 bis 4, **dadurch gekennzeichnet, dass** zwischen der Geräteeinheit (2) und dem Aufnahmehohlraum (3) eine lösbare Verriegelung (13) vorgesehen ist.

6. Vorrichtung nach Anspruch 5 **dadurch gekennzeichnet, dass** die Verriegelung (13) ein federbelastetes Rastteil (14) aufweist und/oder die Verriegelung (13) eine Betätigungsfläche (18a) aufweist, das über die Öffnung (10) zugänglich ist.

7. Vorrichtung nach Anspruch 6, **dadurch gekennzeichnet, dass** die Betätigungsfläche (18a) im Griffbereich der ersten Grifffläche (12) angeordnet ist.

8. Vorrichtung nach Anspruch 5 bis 7, **dadurch gekennzeichnet, dass** die Verriegelung (13) einen um eine horizontale Achse (17) verschwenkbaren Rasthebel (15) aufweist, der an seinem einen Arm mit einem Rastteil (14) versehen ist und der an seinem anderen Arm eine Betätigungsfläche (18a) aufweist, die sich im Wesentlichen parallel zur ersten Grifffläche (12) erstreckt.

9. Vorrichtung nach einem der Ansprüche 1 bis 8, **dadurch gekennzeichnet, dass** die Restwasserschale (9) in einem Gehäuse (5) der Geräteeinheit (2) lösbar verankert ist.

10. Vorrichtung nach einem der Ansprüche 1 bis 9, bei der die die Restwasserschale (9) durch eine form- und/oder reibschlüssige Hemmung in der Geräteeinheit (2) verankert ist.

11. Vorrichtung nach einem der Ansprüche 1 bis 10, die eine Einbau-Kaffeemaschine.

## Claims

1. Device for producing a brewed beverage with an apparatus unit (2), which during the intended use of the device is arranged in a receiving cavity (3), and with a residual water tray (9) which during the intended use of the device is arranged in the apparatus unit (2), **characterised in that** the device comprises means for withdrawing the apparatus unit (2) from the receiving cavity (3) and means for withdrawing the residual water tray (9) from the apparatus unit (9) and the means for withdrawing the apparatus unit (2) from the receiving cavity (3) and the means for withdrawing the residual water tray (9) from the apparatus unit (2) at least partly coincide.

2. Device according to claim 1, **characterised in that** the means for withdrawing the apparatus unit (2) from the receiving cavity (3) comprise a first grip surface (12, 18a), which is arranged at the apparatus unit (2), and an opening (10), by way of which the first grip surface (12, 18a) is accessible, at the apparatus unit (2) and the means for withdrawing the residual water tray (9) from the apparatus unit (2) comprise a second grip surface (11), which is arranged at the residual water tray (4), and the opening (10), by way of which the second grip surface (11) is also accessible, at the apparatus unit (2).

3. Device according to claim 2, **characterised in that** the opening (10) is provided at an interface between a front wall (9b) of the residual water tray (9) and a front wall (5b) of a housing (5) and the second grip surface (11) is provided at a side of the opening (10) at the rear side of the front wall (9b) of the residual water tray (9) and the first grip surface (12, 18a) is provided at the other side of the opening (10) at the rear side of the front wall (5b) of the housing (5).

4. Device according to any one of claims 1 to 3, **characterised in that** the apparatus unit (2) is releasably fixed in the receiving cavity (3).

5. Device according to any one of claims 1 to 4, **characterised in that** a releasable locking means (13) is provided between the apparatus unit (2) and the receiving cavity (3).

6. Device according to claim 5, **characterised in that** the locking means (13) comprises a spring-loaded detent member (14) and/or the locking means (13) has an actuating surface (18a), which is accessible by way of the opening (10).

7. Device according to claim 6, **characterised in that** the actuating surface (18a) is arranged in the grip region of the first grip surface (12).

8. Device according to claim 5 to 7, **characterised in that** the locking means (13) comprises a detent lever (15), which is pivotable about a horizontal axle (17) and which is provided at one arm thereof with a detent member (14) and has at the other arm thereof an actuating surface (18a) extending substantially parallel to the first grip surface (12).

9. Device according to any one of claims 1 to 8, **characterised in that** the residual water tray (9) is releasably fixed in a housing (5) of the apparatus unit (2).

10. Device according to any one of claims 1 to 9, in which the residual water tray (9) is fixed by a shape-locking and/or friction-locking restraining means in the apparatus unit (2).

11. Device according to any one of claims 1 to 10, the device being a built-in coffee machine.

## Revendications

1. Dispositif pour préparer une boisson chaude avec une unité d'appareil (2), qui est disposée dans un espace creux de logement (3) pendant l'utilisation normale du dispositif, et une coupe d'eau résiduelle (9), qui est disposée dans l'unité d'appareil (2) pendant l'utilisation normale du dispositif, **caractérisé en ce que** le dispositif comporte des moyens pour sortir l'unité d'appareil (2) de l'espace creux de logement (3) et des moyens pour sortir la coupe d'eau résiduelle (9) de l'unité d'appareil (2) et les moyens pour sortir l'unité d'appareil (2) de l'espace creux de logement (3) et les moyens pour sortir la coupe d'eau résiduelle (9) de l'unité d'appareil (2) se recoupent au moins partiellement.

2. Dispositif selon la revendication 1, **caractérisé en ce que** les moyens pour sortir l'unité d'appareil (2) de l'espace creux de logement (3) comportent une première surface de prise (12, 18a) disposée sur l'unité d'appareil (2) et une ouverture (10) sur l'unité d'appareil (2), par laquelle la première surface de prise (12, 18a) est accessible, et les moyens pour sortir la coupe d'eau résiduelle (9) de l'unité d'appareil (2) comportent une seconde surface de poignée (11) disposée sur la coupe d'eau résiduelle (4) et l'ouverture (10) sur l'unité d'appareil (2), par laquelle la seconde surface de prise (11) est également accessible.

3. Dispositif selon la revendication 2, **caractérisé en ce que** l'ouverture (10) est prévue sur une interface entre une paroi avant (9b) de la coupe d'eau résiduelle (9) et une paroi avant (5b) d'un boîtier (5) et la seconde surface de prise (11) est prévue sur un côté de l'ouverture (10) sur la face arrière de la paroi avant (9b) de la coupe d'eau résiduelle (9) et la première surface de prise (12, 18a) sur l'autre côté de l'ouverture (10) sur le côté arrière de la paroi avant (5b) du boîtier (5).

4. Dispositif selon l'une quelconque des revendications 1 à 3, **caractérisé en ce que** l'unité d'appareil (2) est ancrée de façon amovible dans l'espace creux de logement (3).

5. Dispositif selon l'une quelconque des revendications 1 à 4, **caractérisé en ce qu'**un verrouillage (13) amovible est prévu entre l'unité d'appareil (2) et l'espace creux de logement (3).

6. Dispositif selon la revendication 5, **caractérisé en ce que** le verrouillage (13) présente une partie d'encliquetage (14) sollicitée par ressort et/ou le verrouillage (13) présente une surface d'actionnement (18a) qui est accessible par l'ouverture (10).

7. Dispositif selon la revendication 6, **caractérisé en ce que** la surface d'actionnement (18a) est disposée dans la zone de prise de la première surface de poignée (12).

8. Dispositif selon les revendications 5 à 7, **caractérisé en ce que** le verrouillage (13) présente un levier d'encliquetage (15) pouvant basculer autour d'un axe (17) horizontal, qui est doté d'une partie d'encliquetage (14) sur l'un de ses bras et présente sur son autre bras une surface d'actionnement (18a) qui s'étend sensiblement parallèlement à la première surface de prise (12).

9. Dispositif selon l'une quelconque des revendications 1 à 8, **caractérisé en ce que** la coupe d'eau résiduelle (9) est ancrée de façon amovible dans un boîtier (5) de l'unité d'appareil (2).

10. Dispositif selon l'une quelconque des revendications 1 à 9, sur lequel la coupe d'eau résiduelle (9) est ancrée par un arrêt par complémentarité de formes et/ou friction dans l'unité d'appareil (2).

11. Dispositif selon l'une quelconque des revendications 1 à 10, qui est une machine à café intégrée.
